# EUROPÄISCHE PATENTSCHRIFT

(11) **EP 1 634 689 B1**
(45) Veröffentlichungstag und Bekanntmachung des Hinweises auf die Patenterteilung: **22.05.2013**
(21) Anmeldenummer: 04021265.6
(22) Anmeldetag: 08.09.2004
(51) Int. Cl.: B29C 47/38, B05C 17/005

(54) **Handextruderschweissgerät**
Handheld extrusion welding device
Dispositif de soudage par extrusion portable

(43) Veröffentlichungstag der Anmeldung: 15.03.2006
(73) Patentinhaber: Leister Technologies AG, 6056 Kägiswil (CH)
(72) Erfinder: Di Miceli, Giuseppe, 5737 Menziken (CH); Arnold, Hans, 6056 Kägiswil (CH)
(74) Vertreter: Klocke, Peter

(56) Entgegenhaltungen:
- EP-A- 0 594 889
- EP-A- 0 887 116
- DE-A1- 19 952 166
- DE-U1- 9 010 633
- US-A- 3 750 905
- US-A- 3 953 006

## Beschreibung

Die vorliegende Erfindung betrifft ein Handextruderschweißgerät zum Verschweißen von thermoplastischen Kunststoffmaterialien, mit einer Extruderschnecke mit einem Befestigungsschaft und mit einer Einrichtung zum axialen Befestigen der Extruderschnecke mit dem Befestigungsschaft an einer Antriebseinrichtung mit einem.

Derartige Handextruderschweißgeräte sind bekannt und werden insbesondere zum Verschweißen von Kunststoffplatten oder dergleichen verwendet. Die bekannten Kunststoffschweißgeräte bestehen im Wesentlichen aus einer Handbohrmaschine, die als Antrieb dient, und einem darauf abnehmbar aufgesetzten Vorsatzgerät. Die Lagerung der Extruderschnecke erfolgt separat im Anschluss an das Getriebe der Handbohrmaschine. Für den Schweißdraht ist ein Einzugskanal vorgesehen, der nach der Lagerung der Extruderschnecke in den die Einzugszone der Extruderschnecke umgebenden Raum mündet. Zum Stand der Technik wird beispielhaft auf die offenlegungsschrift DE 199 52 166 und die Patentschrift US 3,750,905 sowie auf die Offenlegungsschrift JP 60 008 013 verwiesen.

Die Druckschrift US 3,750,905 offenbart ein Handextruderschweißgerät zum Applizieren von thermoplastischen Dichtstoffen. Das Gerät weist ein hohlzylindrisches Fördergehäuse mit einem sich darin längs erstreckenden Förderkanal auf, in dem eine Zuführschnecke drehbar angeordnet ist. Die Zuführschnecke wird von einer Motoreinrichtung angetrieben, die in einem pistolengriffartigen hinteren Gehäuseteil angeordnet ist, wobei zwischen diesem und dem Fördergehäuse eine wärmeisolierende Befestigungsbuchse vorgesehen ist. Die Befestigungsbuchse ist mittels einem Umfangsgewinde mit dem hinteren Gehäuseteil verschraubt, das ein Getriebegehäuse mit einem stirnseitigen Flansch aufweist. Durch den Flansch erstreckt sich ein Befestigungsschaft der Zuführschnecke bis zu einem Getriebeabgangszahnrad, mit dem die Zuführschnecke drehfest verbunden ist.

Die Druckschrift JP 60 008 013 lehrt eine Einstellvorrichtung für das axiale Spiel einer motorisch angetriebenen Förderschnecke einer Extrudereinrichtung, um eine gewisse axiale Bewegung der Förderschnecke während des Förderns zu bestimmen. Die Einstellvorrichtung weist einen ringförmigen Befestigungsflansch auf, der mit einem Getriebegehäuse der Extrudereinrichtung in axialer Richtung verschraubt ist. In den Befestigungsflansch ragt getriebeseitig eine Aufnahmebuchse eines Getriebeabgangszahnrades hinein, in den ein Befestigungsschaft der Förderschnecke mit axialem Spiel drehfest eingreift.

DE 199 52 166 zeigt die Merkmale des Oberbegriffs des Anspruchs 1.

Der vorliegenden Erfindung liegt die Aufgabe zu Grunde, ein Handextruderschweißgerät vorzuschlagen, die speziell für eine Extruderschnecke eine extrem kompakte Lagerung der Extruderschnecke an der Antriebseinrichtung mit dem Getriebe ermöglicht, um das Extruderschweißgerät so kurz wie möglich zu gestalten,

Diese Aufgabe wird erfindungsgemäß durch ein Handextruderschweißgerät mit den Merkmalen des kemzeichnenden Teil des Anspruchs 1 gelöst. Weitere vorteilhafte Ausgestaltungen sind den Unteran prüchen zu entnehmen.

Gemäß der Erfindung weist das Handextruderschweißgerät eine in dem Lagerflansch angeordnete, drehbar gelagerte Abgangswelle auf, auf der am topfseitigen Ende ein Getriebeabgangszahnrad befestigt ist, die eine, vorzugsweise einen polygonförmigen Querschnitt aufweisende Einstecköffnung für den Befestigungsschaft der Extruderschnecke aufweist. Durch einen polygonförmigen Querschnitt kann mit einfachen Mitteln eine optimale Übertragung des Drehmoments auf den Befestigungsschaft erreicht werden. Der Lagerflansch zur Aufnahme der Extruderschnecke ist stirnseitig am einstückigen Getriebegehäuse, das einem topfförmigen Bereich zur Aufnahme des Getriebes aufweist, vorgesehen. Dieses Getriebegehäuse erlaubt damit die optimale Lagerung einerseits des Getriebes und andererseits der Extruderschnecke und ist kostengünstig herstellbar.

Zum Klemmen des Lagerflansches ist mindestens ein zweiteiliger, ringförmiger Klemmflansch mit zwei Klemmflanschhälften vorgesehen. Der Klemmflansch ist von außen auf den Lagerflansch aufsetzbar und liegt vorteilhafterweise mit auf den Lagerflansch abgestimmten Stegen am Lagerflansch an. Er kann leicht bei einem Wechsel des Antriebs entfernt werden und sorgt für die radiale Pressung des Lagerflansches. Je nach Aufbau des Geräts kann dieser Klemmflansch als einfaches ringförmiges Teil oder als Kühlkörper mit entsprechenden Kühlflächen ausgebildet sein.

Um des weiteren ein möglichst kurzes Handextruderschweißgerät zu realisieren, sind bei dem erfindungsgemäßen Handextruderschweißgerät in dem Klemmflansch mindestens ein Einzugskanal für den Schweißdraht vorgesehen. Mehrere Einzugskanäle können unterschiedliche Durchmesser für unterschiedliche Schweißdrähte aufweisen. Vorteilhafterweise ist die Öffnung zum Einstecken des Schweißdrahtes seitlich und die Austrittsöffnung stirnseitig nahe der Extruderschnecke angeordnet.

Durch den Aufbau kann sowohl das Getriebe als auch die Lagerung der Extruderschnecke in einem Gusskörper integriert werden. Der spezielle Aufbau vehindert einen Versatz zwischen der Getriebeachse und der Schneckenachse, minimiert die Anzahl der Maschinenelemente, ermöglicht eine kurze Bauweise des Handextruderschweißgeräts und die präzise Montage sowie schnelle Demontage des Antriebs und der Extruderschnecke.

Die Abgangswelle ist vorzugsweise in dem Gehäuse auf der Extruderschneckenseite mittels eingepressten Radial-Axial-Lagers und auf der Getriebeseite in einem Rillenkugellager gelagert.

Zur axialen Fixierung des Klemmflansches weist der Lagerflansch vorzugsweise einen ringförmigen Einschnitt auf, wobei die Klemmflanschhälften vorteilhafterweise mittels Schraubverbindungen zusammengezogen werden. Zusätzlich können zweckmäßigerweise an dem Gehäuse Verdrehsicherungen für die Klemmflanschhälften angeordnet sein.

Ein derart ausgebildetes Handextruderschweißgerät zeichnet sich durch einen in diesem Bereich sehr kompakten und für einen robusten Betrieb geeigneten Aufbau aus. Ein derartiges Handextruderschweißgerät ermöglicht insbesondere auch die Integration der Antriebseinrichtung mit einem Getriebe sowie die Heizeinrichtung in einem die beiden integrierenden Gehäuse. Durch die besondere Ausgestaltung des Getriebegehäuses ist gleichzeitig ein platzsparender Aufbau mit einfacher Fixierung der Extruderschnecke möglich.

Nachfolgend wird die Erfindung anhand eines Ausführungsbeispiels erläutert. Es stellen dar:
- Figur 1: einen Längsschnitt durch ein Handextruderschweißgerät mit einem Gehäuse, in dem die Antriebseinrichtung und die Heizeinrichtung integriert sind;
- Figur 2: einen Längsschnitt durch den Getriebeabgang;
- Figur 3: einen Querschnitt durch den Lagerflansch mit eingesteckter Extruderschnecke;
- Figur 4: eine perspektivische Ansicht des Getriebegehäuses mit Extruderschnecke in einem Teilaufschnitt;
- Figur 5: ein vergrößerter Teilausschnitt aus dem Handextruderschweißgerät gemäß Figur 1 durch den Kühlkörper und das Getriebegehäuse;
- Figur 6: die Rückseite des zweiteiligen Kühlkörpers;
- Figur 7: eine andere Ausführungsform eines Handextruderschweißgeräts ohne Antriebseinheit und Gebläse umschließendes Gehäuse und
- Figur 8: verschiedene perspektivische Ansichten des Klemmflansches für das Handextruderschweißgerät gemäß Figur 7 von vorne (Figur 8a) und von hinten (Figur 8b).

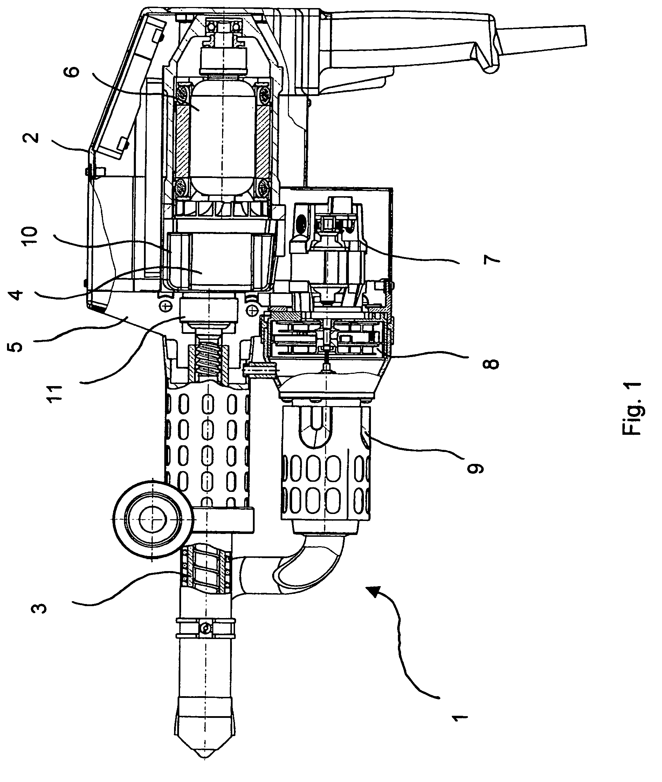

Figur 1 zeigt im Längsschnitt ein Handextruderschweißgerät 1 mit einem Gehäuse 2, das vorzugsweise aus zwei seitlichen Schalen gebildet wird, in dem ein Antriebsmotor 6 mit Getriebe 4 sowie ein Gebläsemotor 7 mit Gebläse 8 integriert ist. Im Anschluss an das Gebläse 8 findet sich die Heizeinrichtung 9. Das Getriebe 4 weist ein Gehäuse 10 auf, in dessen Lagerflansch 11 axial eine Extruderschnecke 3 einsteckbar ist. Zur radialen Fixierung der Extruderschnecke 3 in dem Lagerflansch 11 wird diese über einen zweiteiligen Kühlkörper 5, der gleichzeitig als Klemmflansch wirkt, zusammengezogen.

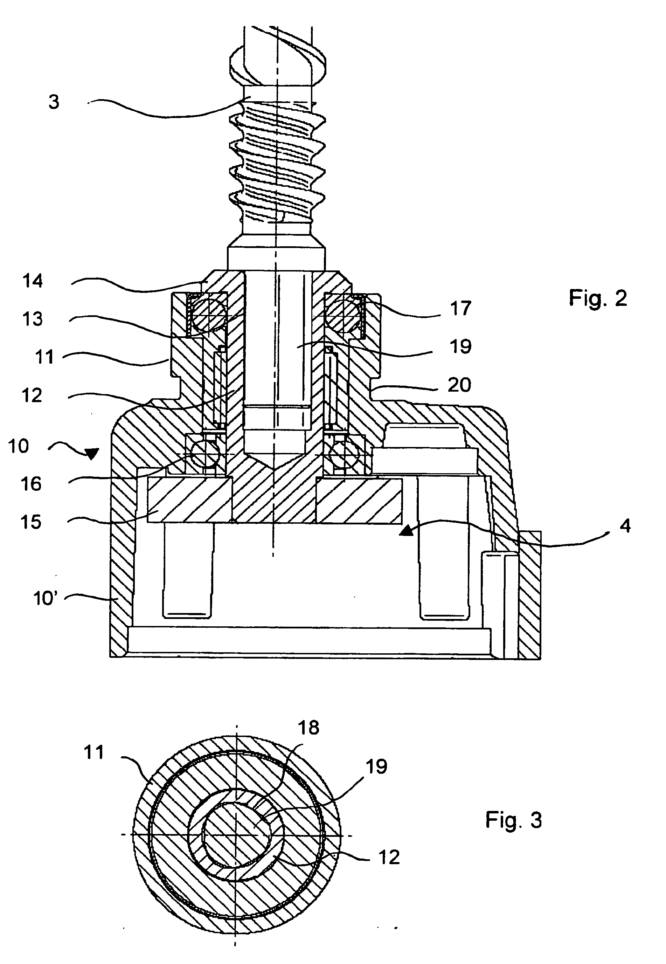

Figur 2 zeigt in einer vergrößerten Ansicht das Gehäuse 10 aus einem Kokillenguss, das in dem erweiterten Bereich 10' die einzelnen Getriebeteile aufnimmt und am anderen Ende den Lagerflansch 11 zur Aufnahme der Extruderschnecke 3 aufweist. In dem Lagerflansch 11 befindet sich die Abgangswelle 12, die von dem stirnseitigen Ende in die Bohrung 13 in den Lagerflansch 11 bis zum Anschlag 14 eingeschoben wird. Vor dem Übergang in den erweiterten Bereich 10' befindet sich an dem Lagerflansch 11 eine Ringnut 20 für den Eingriff eines Klemmflansches, beispielsweise in Form des Kühlkörpers 5. Der Klemmflansch besteht aus mindestens zwei Hälften und sorgt durch das Verspannen der beiden Hälften für eine entsprechende Klemmung des Lagerflansches 11. Durch den Hinterschnitt am Lagerflansch 11 leitet der Klemmflansch die Kraft in das Axiallager 17 auf der Schneckenseite zurück. Am anderen Ende des Lagerflansches 11 ist ein Getriebeabgangszahnrad 15 aufgepresst, so dass die Abgangswelle 12 axial fixiert ist.

Die Abgangswelle 12 ist in dem Lagerflansch 11 auf der Getriebeseite über ein in das Gehäuse 10 eingepresstes Rillenkugellager 16 und auf der Schneckenseite über ein in das Gehäuse 10 eingepresstes Nadel Radial-Axiallager 17 gelagert.

Aus Figur 3 ist die Ausbildung der Bohrung 18 in der Abgangswelle 12 ersichtlich. Diese weist wie der Schaft 19 der Extruderschnecke 3 einen polygonförmigen Querschnitt auf, um das Drehmoment optimal zu übertragen und gleichzeitig eine einfache Justierung der Extruderschnecke 3 in der Abgangswelle 12 zu realisieren. Mit diesem Aufbau ist ein nominales Abgangsdrehmoment von 13 Nm und ein maximal Abgangsdrehmoment von ca. 20 Nm möglich.

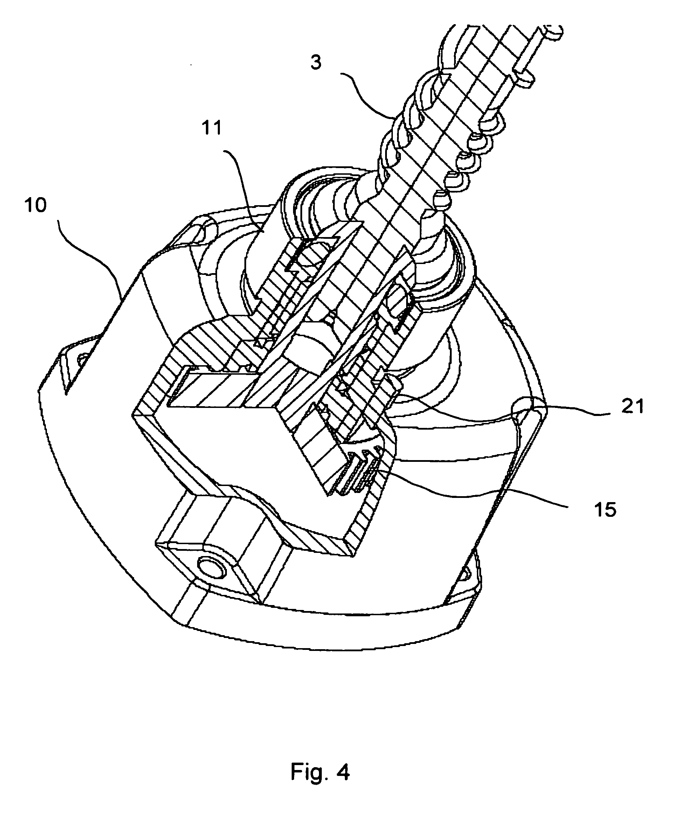

Figur 4 zeigt den vollständigen Zusammenbau des Getriebegehäuses 10 mit Stiften 21 als Verdrehsicherung, die in das Gehäuse 10 eingepresst sind und in entsprechende Schlitze in dem Klemmflansch eingreifen.

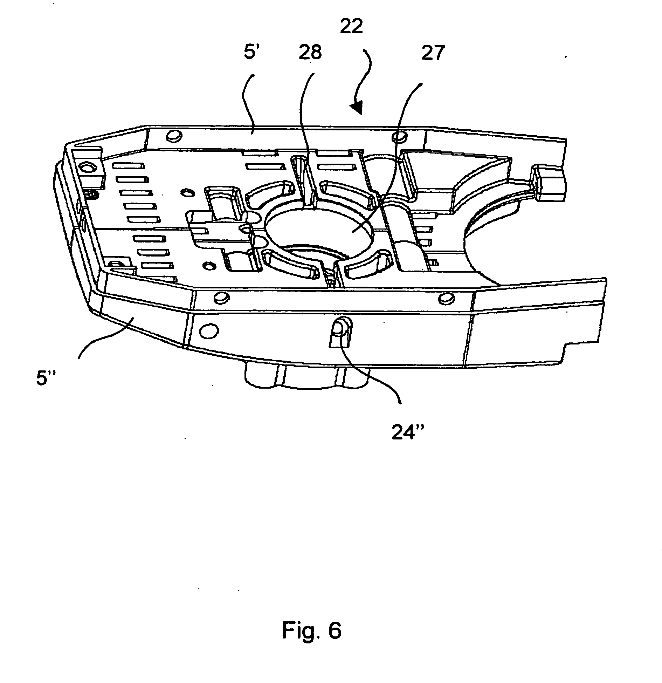

Wie bereits vorstehend erwähnt, kann das allgemein als Klemmflansch bezeichnete Teil, das auf den Lagerflansch 11 wirkt, verschiedenartig ausgebildet sein. Bei dem Ausführungsbeispiel gemäß Figur 1 übernimmt der Kühlkörper 5 gleichzeitig die Funktion des Klemmflansches. In dem Kühlkörper 5 sind zusätzlich Einzugskanäle 24, 24' vorgesehen, die in den Einzugsbereich der Extruderschnecke 3 münden. Die Einzugskanäle 24, 24' weisen unterschiedliche Durchmesser auf, um unterschiedlich dicke Schweißdrähte einführen zu können. In dem Kühlkörper 5, der aus zwei Kühlkörperhälften 5' und 5" besteht, sind entsprechende halbrunde Stege 27 angeordnet, die an ihrem Ende in die Nut 20 eingreifen und an dem Lagerflansch 11 anliegen. Durch Verspannen der Kühlkörperhälften 5' und 5" mittels geeigneter Schraubverbindungen wird die entsprechende Anpresskraft erzeugt. Die Innenseite der beiden Kühlkörperhälften 5' und 5" sind in der Figur 6 dargestellt. Die Querschlitze 28 dienen dem Eingriff der Stifte 21, um eine zusätzliche Verdrehsicherung bereitzustellen. Die Öffnungen 22 dienen der Aufnahme von Schraubverbindungen.

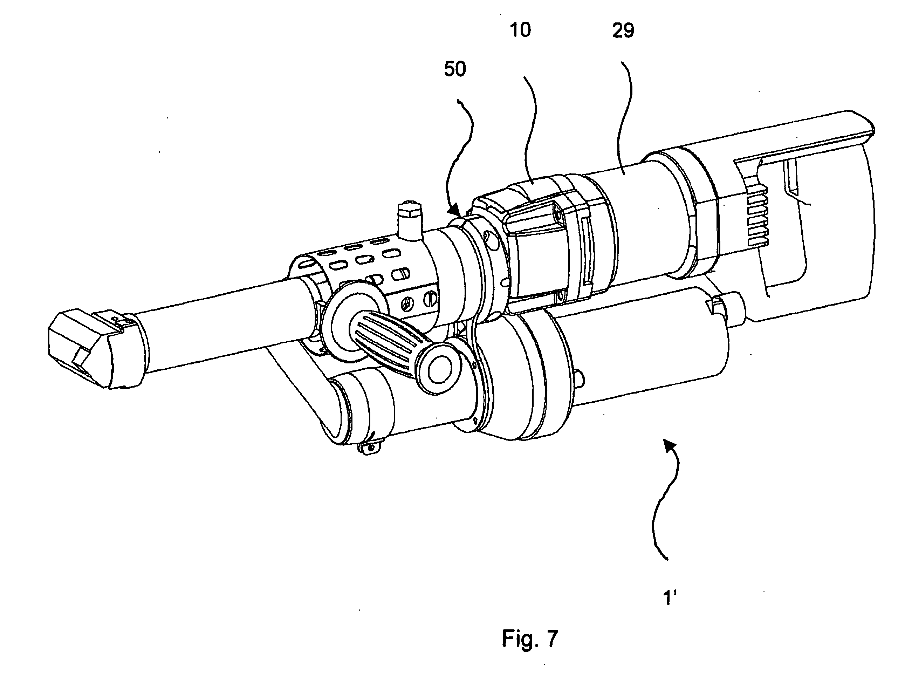

Figur 7 zeigt eine andere Ausführungsform eines Extruderschweißgerätes 1', bei dem das Getriebegehäuse 10 direkt an das eine Antriebseinrichtung umgebende Gehäuse 29 angeflanscht ist. Entsprechend ist nur ein ringförmiger Klemmflansch 50, der ebenfalls aus zwei Hälften besteht, vorgesehen.

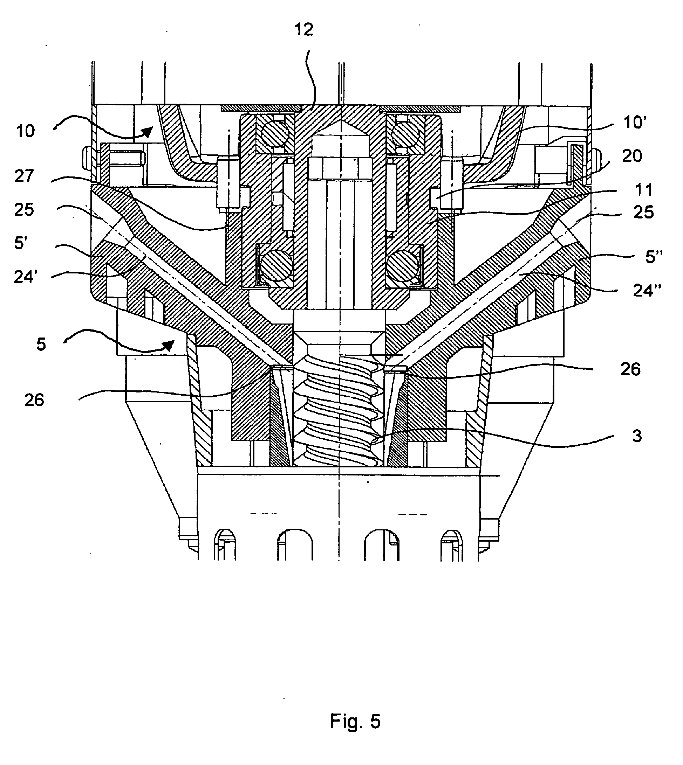

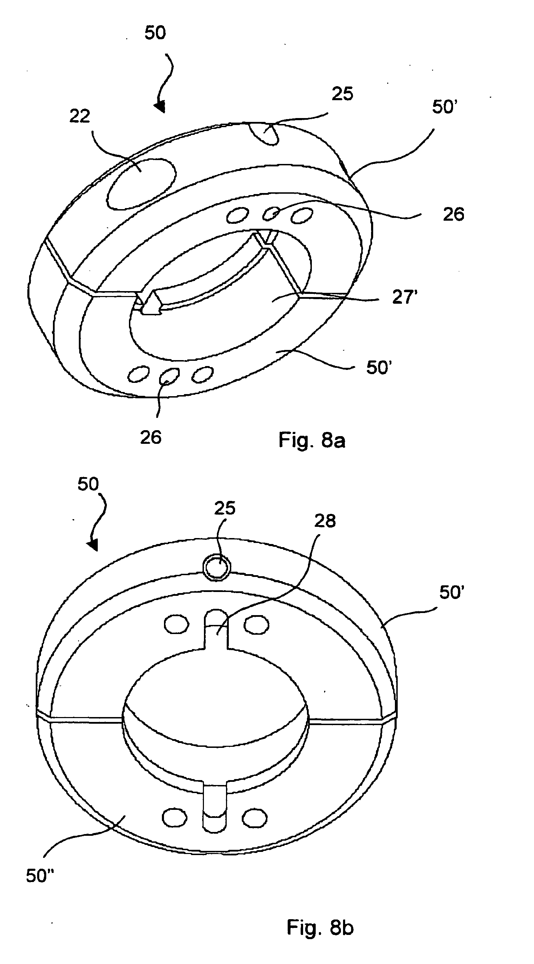

Der Klemmflansch 50 mit den beiden Klemmflanschhälften 50' und 50" ist in der Figur 8a von vorne dargestellt und zeigt die bereits im Zusammenhang mit dem Kühlkörper 5 beschriebenen Elemente, die gleich beziffert sind. Der Steg 27' greift am Ende in die Nut 20 am Lagerflansch 11 ein. Die Eintrittsöffnung 25 des jeweiligen Einzugskanals 24', 24" befindet sich seitlich und die Austrittsöffnung 26 an der jeweiligen Stirnseite des Klemmflansches 50' bzw. 50" (bzw. 5' und 5" in Figur 5). Figur 8b zeigt die Rückseite des Klemmflansches 50.

## Patentansprüche

1. Handextruderschweißgerät (1) zum Verschweißen von thermoplastischen Kunststoffmaterialien, mit einer Extruderschnecke (3) mit einem Befestigungsschaft (19), mit einer Einrichtung zum axialen Befestigen der Extruderschnecke (3) mit dem Befestigungsschaft (19) an einer Antriebseinrichtung (6) mit einem Getriebe (4), und mit einem einstückigen Getriebegehäuse (10), das einen topfförmigen Bereich (10') zur Aufnahme des Getriebes (4) und einen stirnseitigen Lagerflansch (11) zur Aufnahme der Extruderschnecke (3) aufweist, **dadurch gekennzeichnet, dass** in dem Lagerflansch (11) eine drehbar gelagerte Abgangswelle (12) angeordnet ist, die eine Einstecköffnung (18) für den Befestigungsschaft (19) der Extruderschnecke (3) aufweist, wobei auf der Abgangswelle (12) am topfseitigen Ende ein Getriebeabgangszahnrad (15) befestigt ist, und dass mindestens ein zweiteiliger Klemmflansch (5, 50) mit zwei Klemmflanschhälften (5', 5", 50', 50") vorgesehen ist, der zum Klemmen des Lagerflansches (11) von außen auf den Lagerflansch (11) aufsetzbar ist, wobei in dem Klemmflansch (5, 50) mindestens ein Einzugskanal (24', 24") für einen Schweißdraht angeordnet ist.

2. Handextruderschweißgerät nach Anspruch 1, **dadurch gekennzeichnet dass** der Klemmflansch (5,50) mit auf den Lagerflansch (11) abgestimmten Stegen (27) am Lagerflansch (11) anliegt.

3. Handextruderschweißgerät nach Anspruch 1 oder 2, **dadurch gekennzeichnet, dass** der Einzugskanal (24', 24") eine seitliche Eintrittsöffnung (25) und eine stirnseitige Austrittsöffnung (26) an dem Klemmflansch (5, 50) aufweist.

4. Handextruderschweißgerät nach einem der vorangegangenen Ansprüche, **dadurch gekennzeichnet, dass** der Lagerflansch (11) einen ringförmigen Einschnitt (20) zur axialen Fixierung des Klemmflansches (5, 50) aufweist.

5. Handextruderschweißgerät nach Anspruch 4, **dadurch gekennzeichnet, dass** die Klemmflanschhälften (5', 5"; 50', 50") mittels Schraubverbindungen (22) zusammengezogen werden.

6. Handextruderschweißgerät nach Anspruch 1 , **dadurch gekennzeichnet, dass** an dem Gehäuse (10) Verdrehsicherungen (21) für die Klemmflanschhälften (5', 5"; 50', 50") angeordnet sind.

## Claims

1. Handheld extruder welding device (1) for welding thermoplastic synthetic materials, comprising an extrusion screw (3) with an attachment shaft (19) having a device for the axial attachment of the extrusion screw (3) with the attachment shaft (19) to a drive system (6) being equipped with a gear (4), and with a one-piece gear housing (10) having a cup-shaped area (10') for holding the gear (4) and a front-side bearing flange (11) for accepting the extrusion screw (3), **characterized in that** a pivoted output shaft (12) is located in the bearing flange (11), which comprises an insertion opening (18) for the attachment shaft (19) of the extrusion screw (3), wherein an output gear cog wheel (15) is mounted at the cup-side end of this attachment shaft (19), and that at least a two-part clamping flange (5, 50) having two clamping flange halves (5', 5", 50', 50") is provided, that can be placed from the outside onto the bearing flange (11) in order to clamp the bearing flange (11), wherein at least one feed channel (24', 24") for a welding wire is arranged in the clamping flange (5, 50).

2. Handheld extruder welding device according to claim 1, **characterized in that** the clamping flange (5, 50) rests on the bearing flange (11) by means of ribs (27) being adjusted to the bearing flange (11).

3. Handheld extruder welding device according to claim 1 or 2, **characterized in that** the feed channel (24', 24") has a lateral input opening (25) and a front face output opening (26) positioned at the clamping flange (5, 50).

4. Handheld extruder welding device according to any one of the preceding claims, **characterized in that** the bearing flange (11) has an annular cut (20) for axially fixing of the clamping flange (5, 50).

5. Handheld extruder welding device according to claim 4, **characterized in that** the clamping flange halves (5', 5", 50', 50") are pulled together by means of bolt connections (22).

6. Handheld extruder welding device according to claim 1, **characterized in that** the housing (10) is equipped with torsion preventers (21) for the clamping flange halves (5', 5", 50', 50").

## Revendications

1. Appareil portatif (1) de soudage par extrusion dévolu au soudage de matières thermoplastiques, comprenant une vis sans fin extrudeuse (3) pourvue d'un fût de fixation (19), un dispositif d'assujettissement axial de ladite vis sans fin extrudeuse (3), par ledit fût de fixation (19), à un dispositif d'entraînement (6) muni d'une transmission (4), et un carter monobloc (10) de transmission comportant une région (10') en forme de pot, conçue pour recevoir ladite transmission (4), et une collerette frontale de montage (11) destinée à recevoir la vis sans fin extrudeuse (3), **caractérisé par le fait qu'**un arbre de sortie (12) monté à rotation, logé dans la collerette de montage (11), présente un orifice d'emboîtement (18) dédié au fût de fixation (19) de la vis sans fin extrudeuse (3), une roue dentée de sortie (15) de la transmission étant fixée sur ledit arbre de sortie (12) à l'extrémité située côté pot ; et **par le fait qu'**il est prévu au moins une bride de coincement (5, 50) en deux parties, composée de deux moitiés (5', 5" ; 50', 50") et pouvant être mise en place de l'extérieur sur la collerette de montage (11) en vue de coincer ladite collerette de montage (11), au moins un canal d'insertion (24', 24"), affecté à un fil de soudage, étant pratiqué dans ladite bride de coincement (5, 50).

2. Appareil portatif de soudage par extrusion selon la revendication 1, **caractérisé par le fait que** la bride de coincement (5, 50) est en applique contre la collerette de montage (11) par des membrures (27) coordonnées avec ladite collerette de montage (11).

3. Appareil portatif de soudage par extrusion selon la revendication 1 ou 2, **caractérisé par le fait que** le canal d'insertion (24', 24") comprend une ouverture latérale d'entrée (25) et une ouverture frontale de sortie (26) sur la bride de coincement (5, 50).

4. Appareil portatif de soudage par extrusion selon l'une des revendications précédentes, **caractérisé par le fait que** la collerette de montage (11) présente une encoche annulaire (20) dévolue au blocage axial à demeure de la bride de coincement (5, 50).

5. Appareil portatif de soudage par extrusion selon la revendication 4, **caractérisé par le fait que** les moitiés (5', 5" ; 50', 50") de la bride de coincement sont solidarisées par serrage au moyen de liaisons (22) par vissage.

6. Appareil portatif de soudage par extrusion selon la revendication 1, **caractérisé par le fait que** des organes (21) d'arrêt antirotation, destinés aux moitiés (5', 5" ; 50', 50") de la bride de coincement, sont disposés sur le carter (10).
